# EUROPÄISCHE PATENTSCHRIFT

(11) **EP 2 446 239 B1**
(45) Veröffentlichungstag und Bekanntmachung des Hinweises auf die Patenterteilung: **01.05.2013**
(21) Anmeldenummer: 10730114.5
(22) Anmeldetag: 10.06.2010
(51) Int. Cl.: G01L 19/06, G01L 23/18, G01L 9/00

(54) **DRUCKSENSORMESSELEMENT SOWIE DAMIT VERSEHENER DRUCKSENSOR ZUR DRUCKERFASSUNG IN EINEM BRENNRAUM EINER VERBRENNUNGSKRAFTMASCHINE**
PRESSURE SENSOR MEASURING ELEMENT AND PRESSURE SENSOR WHICH IS PROVIDED WITH THE LATTER AND IS INTENDED TO DETECT THE PRESSURE IN A COMBUSTION CHAMBER OF AN INTERNAL COMBUSTION ENGINE
ELEMENT DE MESURE DE CAPTEUR DE PRESSION ET CAPTEUR DE PRESSION EQUIPE D'UN TEL ELEMENT, POUR DETECTER LA PRESSION DANS UNE CHAMBRE DE COMBUSTION D'UN MOTEUR À COMBUSTION INTERNE

(30) Priorität: 26.06.2009 DE 102009030702
(43) Veröffentlichungstag der Anmeldung: 02.05.2012
(73) Patentinhaber: Trafag AG, 8708 Männedorf (CH)
(72) Erfinder: STAIGER, Ulrich, CH-8260 Stein am Rhein (CH); DIAS-LALCACA, Peter, CH-8633 Wolfhausen (CH); HAURI, Peter, CH-8634 Hombrechtikon (CH); ZEISEL, Dieter, CH-8127 Forch (CH)
(74) Vertreter: Flügel Preissner Kastel Schober
(86) Internationale Anmeldenummer: PCT/EP2010/058163
(87) Internationale Veröffentlichungsnummer: WO 2010/149501

(56) Entgegenhaltungen:
- EP-A2- 1 255 099
- DE-A1- 10 131 688
- DE-A1- 19 847 793
- DE-A1-102005 060 652
- US-B1- 6 655 216

## Beschreibung

Die Erfindung betrifft ein Drucksensormesselement mit den Merkmalen des Oberbegriffs des Anspruchs 1. Außerdem betrifft die Erfindung einen mit einem solchen Drucksensormesselement versehenen Drucksensor zur Messung des Brennraumdrucks in einer Verbrennungskraftmaschine mit einem solchen Drucksensormesselement.

Ein solcher Drucksensor und ein solches Drucksensormesselement sind aus der DE 198 47 793 A1 bekannt. Auf diese Druckschrift wird hiernach noch näher eingegangen.

Die US 4 382 377 A beschreibt einen Drucksensor für eine Verbrennungskraftmaschine, um dort den Innendruck in einem Brennraum zu messen. Hierzu weist der bekannte Drucksensor ein Sensoraußengehäuse auf, das in eine Gewindebohrung einer Brennraumwand (d.h. z.B. einen Zylinderkopf) eingeschraubt werden kann. An dem dem Brennraum zuzuwendenden ersten Ende ist das Sensoraußengehäuse mit einer Trennmembran verschlossen, die durch den Brennraumdruck auslenkbar ist. Die Trennmembran ist einstückig mit dem Sensoraußengehäuse ausgebildet. Die Auslenkung der Trennmembran wird über einen Stößel, der unmittelbar innerhalb eines schlanken Gewindebereichs des Sensoraußengehäuses geführt ist, zu einem brennraumabgewandten zweiten Ende übertragen, wo ein Kraftmesselement die Längsbewegung des Stößel in Drucksignale umwandelt. Auf diese Weise ist der Drucksensor recht einfach aufgebaut, wobei das empfindliche Kraftmesselement außerhalb der hohen Brennraumtemperaturen in einem geschützten Bereich untergebracht ist. Hierzu ist der Stößel aus einer schlecht wärmeleitenden Keramik hergestellt. Ein solcher Drucksensor kann jedoch erhebliche Temperaturabhängigkeiten aufweisen, da sich das Sensorgehäuse bei den an der Brennraumwand herrschenden Temperaturgradienten unterschiedlich zum Stößel ausdehnen kann. Außerdem können Belastungen des Sensorgehäuses beim Einschrauben, was zwecks Gasdichtigkeit mit einem nicht unerheblichen Drehmoment geschieht, zu einer Verfälschung der Stößelauslenkung und somit zu Fehlern bei der Druckmessung führen.

Ein vergleichbarer Aufbau eines Brennraumdrucksensors mit einem unmittelbar in einem Sensorgehäuse geführten Stößel aus Metall oder Keramik ist aus der US 5 703 282 A bekannt. Hierbei ist die Trennmembran jedoch nicht einstückig mit dem Sensorgehäuse ausgebildet, sondern an dessen brennraumseitigen Ende dieses hermetisch verschließend angeschweißt. Ein vergleichbarer Aufbau ist auch in der US 5 199 303 A zu finden.

Um die vorerwähnten Temperaturabhängigkeiten zu mildern, ist der Drucksensor für Brennräume von Verbrennungskraftmaschinen gemäß der EP 1 255 099 B1 vorgeschlagen worden. Dabei ist innerhalb des Sensoraußengehäuses ein gesondertes Drucksensormesselement angeordnet, welches eine ein Distanzelement bildende Hülse hat, in der der Stößel geführt ist. Diese Hülse ist mit ihrem dem Brennraum zuzuwendenden ersten Ende an dem Sensoraußengehäuse befestigt. An dem innen liegenden zweiten Ende ist die Hülse nicht befestigt und trägt dort ein Kraftmesselement, auf das die Auslenkung der Trennmembran mittels des Stößels übertragen wird. Sowohl der Stößel als auch die Hülse sind aus Keramik gefertigt, um die hohen Brennraumtemperaturen und auch Temperaturschocks abzublocken. Dieser Brennraumsensor funktioniert recht gut und hat sich in der Praxis bewährt. Allerdings ist er relativ teuer in der Herstellung.

Aus der DE 10 2005 060 652 A1 ist ein kombiniertes Druck- und Temperaturmessmodul zur Messung des Druckes oder des Druckes und der Temperatur eines Mediums bekannt. Eine Membran ist durch das Medium beaufschlagt und wirkt mit einem in einem Gehäuse aufgenommenen Drucksensor zusammen. Die Membran wandelt den Druck des Mediums in eine Kraft um, die mittels eines Übertragungselementes an den Drucksensor übertragen wird, und weist in einem zentralen Bereich einen Hohlraum zur Aufnahme eines Temperaturfühlers auf. Dieses Modul ist zum Einsatz in Kraftfahrzeug-Klimaanlagen konzipiert, um sowohl ein Drucksignal als auch ein Temperatursignal nach dem in der Klimaanlage vorgesehenen Verdichter für ein Kältemittel zur Regelung zur Verfügung zu stellen. Eine Eignung zur Druckerfassung in Brennräumen von in Betrieb befindlichen Verbrennungskraftmaschinen ist weder erwähnt noch möglich.

Die DE 101 31 688 A1 betrifft einen temperaturkompensierten Drucksensor mit einer druckaufnehmenden Membran, einem sich damit verbiegenden Biegeelement und einem Temperaturausgleichselement in Form einer Ausgleichsmembran. Auch hier ist eine Eignung für Druckerfassung in Brennräumen von laufenden Verbrennungskraftmaschinen weder erwähnt noch ersichtlich.

Aus der US 6 655 216 B1 ist ein Membrandrucksensor nach dem Lastübertragungsprinzip bekannt, der genau Drücke erfassen soll, jedoch kostengünstig und leicht herstellbar sein soll und für Massenfabrikation geeignet sein soll. Hierzu wird ein Balkenelement aus Silikon vorgeschlagen. Als Einsatz wird eine Druckmessung in hochkorrosiven Gasen während eines Halbleiterfabrikationsprozesses erwähnt. Eine Eignung zur Druckerfassung in Brennräumen laufender Verbrennungsmaschinen ist weder erläutert noch ersichtlich.

Aus der eingangs erwähnten DE 198 47 793 A1 ist dagegen ein Drucksensorelement mit einer ersten topfförmigen Membran und einem auf die nach außen weisende Rundfläche der Membran aufgebrachten Dehnungsmessstreifen bekannt. Hierzu wird auf die erste topfförmige Membran eine zweite, zu der ersten umgekehrt angeordnete und mit dieser fest verbundene zweite topfförmige Membran und ein zwischen den beiden Grundflächen der Membranen angeordneter, eine Wölbung der Grundfläche der zweiten Membran auf die erste Membran übertragender Stift vorgesehen. Die entsprechenden Elemente des Drucksensorelements werden miteinander verschweißt. Es ist ein Einsatz zur Messung der Verbrennungsdrücke in Kolbenmotoren, also eine Druckerfassung in einem Brennraum einer laufenden Verbrennungskraftmaschine, erwähnt. Aufgabe der Erfindung ist es, eine Druckmesszelle der im Oberbegriff des Anspruchs 1 genannten Art derart zu verbessern, dass bei gleichbleibender oder verbesserter Genauigkeit und Temperaturunabhängigkeit eine kostengünstigere Herstellung möglich ist.

Diese Aufgabe wird durch ein Drucksensormesselement mit den Merkmalen des Anspruchs 1 gelöst.

Ein damit versehener Drucksensor für eine Druckmessung in Brennräumen von Verbrennungskraftmaschinen (z.B. Zünddrucksensor), der ein solches erfindungsgemäßes Drucksensormesselement aufweist, ist Gegenstand des Nebenanspruchs.

Vorteilhafte Ausgestaltungen der Erfindung sind Gegenstand der Unteransprüche.

Die Erfindung schafft ein Drucksensormesselement für einen Drucksensor zur Druckerfassung in einem Brennraum einer Verbrennungskraftmaschine während deren Betrieb. Um die dort herrschenden hohen Temperatur- und Druckschwankungen beherrschen zu können, ist das Drucksensormesselement mit einer Trennmembran, einem Stößel zum Übertragen von Auslenkungen der Trennmembran auf ein Kraftmesselement und einer den Stößel aufnehmenden Hülse versehen, die an einem dem Brennraum zuzuwendenden ersten Ende mit der Trennmembran verschlossen ist und an dem entgegen gesetzten zweiten Ende zum Tragen des Kraftmesselements ausgebildet ist. Um einen einfachen Aufbau zu schaffen ist weiter vorgesehen, dass der Stößel einstückig mit der Trennmembran als Membran-Stößel-Einheit ausgebildet, wobei sowohl die Hülse als auch die Membran-Stößel-Einheit aus Metall und zwar beide aus dem gleichen Material gebildet sind.

Dadurch lässt sich eine Druckmesszelle mit minimaler Teileanzahl herstellen. Es reichen bereits zwei Teile zum Bilden der Druckmesszelle aus. Trennstellen zwischen Membran und Stößel werden vermieden, es muss keine Befestigung erfolgen. Die Materialauswahl Metall senkt gegenüber Keramik die Kosten. Überraschenderweise hat sich bei Versuchen herausgestellt, dass trotz der Wahl von Metall für Hülse und Stößel eine ausreichende Temperaturabschirmung erreichen lässt. Insbesondere lässt sich die gute Wärmeabfuhr des Metalls der Hülse zur Wärmeabfuhr über ein äußeres Sensorgehäuse nutzen.

Zum Beispiel lässt sich dann, wenn der Brennraumsensor nahe einer Kühlmittelleitung zum Kühlen der Verbrennungskraftmaschine angeordnet wird, die Kühlwirkung auch bis in das Innere des Drucksensors nutzen.

Durch die Materialeinheitlichkeit wird eine gleichmäßige Ausdehnung von Hülse und Membran-Stößelelement sicher gestellt. Somit werden nicht nur Beeinträchtigungen durch eine unterschiedliche Temperaturausdehnung von Hülse und Stößel vermieden, es werden auch eventuelle uneinheitliche Temperaturausdehnungen der Trennmembran relativ zur Hülse und relativ zum Stößel vermieden.

Bei einer vorteilhaften Ausgestaltung der Erfindung ist vorgesehen, dass die Membran-Stößel-Einheit an dem der Trennmembran entgegen gesetzten Ende des Stößels ebenfalls einstückig eine zweite Membran aufweist, die mit dem zweiten Ende der Hülse abschließt. Dies dient insbesondere der größeren Sicherheit und/oder der Abschirmung der Kraftmesssensorik von den im Brennraum herrschenden Bedingungen.

Gemäß einer weiteren vorteilhaften Ausgestaltung der Erfindung ist vorgesehen, dass die Membran-Stößel-Einheit monolithisch aus einem Stück gefertigt ist. Dadurch lassen sich jegliche Trennstellen vermeiden. Trotz einfacher Herstellung ergibt sich ein sicheres und zuverlässiges Bauteil, das sowohl als Membran als auch zur Übertragung der Membranbewegung in einen von dem Brennraum abgeschirmten Bereich dient.

Gemäß einer weiteren vorteilhaften Ausgestaltung der Erfindung ist vorgesehen, dass das zum Beispiel als Druckmesszelle ausgebildete Drucksensormesselement insgesamt aus einem einheitlich gleichen Material, nämlich Metall und insbesondere Stahl, gefertigt ist.

Bei einer weiteren vorteilhaften Ausgestaltung ist vorgesehen, dass ein Kraftmesselement einerseits an dem zweiten Ende der Hülse und andererseits mittelbar oder unmittelbar an dem der Trennmembran abgewandten Ende des Stößels befestigt ist und aus dem gleichen Material wie die Hülse und die Membran-Stößel-Einheit gefertigt ist. Insbesondere ist das Kraftmesselement als Biegebalken mit Dehnmessstreifen ausgeführt. Solche Kraftmesselemente sind grundsätzlich bekannt, beispielsweise aus der eingangs erwähnten EP 1 255 099 B1. Jedoch ist ein solches Kraftmesselement von besonderem Vorteil, wenn es in dem erfindungsgemäßen Drucksensormesselement verwendet wird, da es materialeinheitlich wie das erfindungsgemäße Drucksensormesselement gefertigt werden kann, so dass Ungenauigkeiten wegen abweichender Temperaturausdehnung auch zwischen der Hülse und der Membran-Stößel-Einheit einerseits und dem Kraftmesselement andererseits vermieden werden.

Bei einer weiteren bevorzugten Ausgestaltung der Erfindung ist vorgesehen, dass die Hülse an ihrem ersten Ende einen sich radial nach außen erstreckenden Flansch und einen sich von dem Flansch mit geringerem Außendurchmesser axial in Richtung Trennmembran vorstehenden Ringvorsprung aufweist und dass die Trennmembran einen äußeren verdickten Randringbereich aufweist, der außenseitig bündig mit dem Flansch abschließt und innen den Ringvorsprung übergreift. Dadurch ist das Zusammenfügen der beiden Einzelteile des Drucksensormesselements erleichtert und die Gasdichtigkeit wird erhöht. Außerdem ist gerade an der Stelle, an der die Hülse vorteilhaft mit einem Sensoraußengehäuse zu verbinden ist, eine große Materialmasse vorgesehen. Dies erhöht die Stabilität und erleichtert die Wärmeübertragung von der Hülse auf das Sensoraußengehäuse. Insbesondere lässt sich der Flansch auch als Anschlag nutzen, bis zu dem die Hülse in das Sensoraußengehäuse einführbar ist. Damit sind eine exakte Positionierung und eine Abdichtung der Schnittstelle zwischen Sensoraußengehäuse und Drucksensormesselement erleichtert.

Bei einer weiteren vorteilhaften Ausgestaltung der Erfindung ist vorgesehen, dass die Hülse und die Trennmembran stoffschlüssig, insbesondere durch Schweißen, aneinander befestigt sind. Dadurch lässt sich in kostengünstiger Weise eine gute Gasdichtheit und sichere Befestigung erzielen.

Bei einer weiteren vorteilhaften Ausgestaltung der Erfindung ist vorgesehen, dass ein Hohlraum zwischen der Hülse und der Membran-Stößel-Einheit evakuiert ist oder eine Füllung mit Feststoffpartikeln aus einem Material mit gegenüber Brennraumtemperaturen höherem Schmelzpunkt aufweist.

Eine Evakuierung hat den Vorteil, dass eine Konvektion verhindert wird. Eine Füllung mit z.B. feuerfesten Feststoffpartikeln, wie zum Beispiel mit Quarzsand, hat den Vorteil, dass das Sensorinnere sowie die Umgebung auch bei Bruch der Frontmembran geschützt werden (Sicherheit bei Frontmembranbruch).

Gemäß einer weiteren vorteilhaften Ausgestaltung kann die Druckmesszelle auch mit einer Strahlungsbarriere versehen sein, um das Sensorinnere vor Wärmestrahlung oder sonstiger störender Strahlung abzuschirmen. Vorzugsweise ist die Strahlungsbarriere zweiteilig geschlitzt, um sie einfacher in den Hohlraum einbauen zu können.

Bei einer weiteren vorteilhaften Ausgestaltung der Erfindung ist vorgesehen, dass der Stößel eine von dem zweiten Ende aus zugängliche, sich in Längsrichtung ersteckende Längsbohrung aufweist. In diese Bohrung lässt sich eine Messsonde, insbesondere zur Temperaturmessung einführen. Aufgrund des Metallmaterials lässt sich eine Temperaturänderung relativ schnell auch von innen messen. Kommt es beispielsweise zu einer starken Temperaturerhöhung (Hitzewelle), lässt sich dies mit einer Sonde früher erfassen. Es kann ein schnelles Signal erzeugt werden, das z.B. für eine Temperaturkompensation zur Kompensierung von eventuell trotz des speziellen Aufbaus auftretender Temperaturabhängigkeiten genutzt werden kann.

Ein mit einem solchen Drucksensormesselement versehener Drucksensor ist relativ kostengünstig herstellbar und aufgrund seines einfachen Aufbaus auch sehr zuverlässig. Je weniger Teile ein Sensor hat, desto seltener ist die Gefahr, dass ein Teil ausfällt. Dennoch ist der Drucksensor gut zur Druckerfassung in einem Brennraum einer Verbrennungskraftmaschine während deren Betrieb geeignet.

In bevorzugter Ausgestaltung des Drucksensors ist vorgesehen, dass er ein äußeres Sensorgehäuse zur Befestigung an einem den Brennraum begrenzenden Bauteil aufweist, wobei die Hülse in dem Sensorgehäuse aufgenommen ist und ausschließlich mit einem an ihrem ersten Ende ausgebildeten Endbereich an dem Sensorgehäuse befestigt ist. Durch die Unabhängigkeit der Hülse von dem Sensoraufbau bleibt das Drucksensormesselement frei von Einflüssen durch Einbaukräfte.

Vorzugsweise hat das äußere Sensorgehäuse einen Werkzeugangriff oder Werkzeugangriffsbereich mit Werkzeugangriffsflächen für ein Werkzeug. Dies kann zum Beispiel ein Schraubenschlüssel und insbesondere einen Maulschlüssel sein. Damit lässt sich der Drucksensor mit einem Einschraubgewinde druck- und erschütterungsfest in ein Innengewinde eines das zu messende Medium beinhaltenden Gehäuses, beispielsweise in ein Innengewinde an einem einen Brennraum umschließenden Motorblock oder ein Innengewinde an einem Rohr oder einem Behälter eines Hydrauliksystems, eingeschraubt werden

Um das Einschrauben zu erleichtern, z. B. um Druck über das Werkzeug in Einschraubrichtung ausüben zu können, ist der Werkzeugangriffsbereich in bevorzugter Ausgestaltung zwischen dem Einschraubgewinde und wenigstens einer ersten Werkzeugangriffsfläche mit einen Vorsprung zum Führen des Werkzeuges, vorzugsweise zum Vermeiden eines Abrutschens zu dem Einschraubgewinde hin, versehen.

Andererseits ist es wünschenswert, den Drucksensor oder das Sensoraußengehäuse, beispielsweise im Zuge einer Bearbeitung bei Herstellung oder Wartung, in eine Halterung, beispielsweise einen Schraubstock, einführen zu können. Um ein Einführen und Ausführen auch in Längsrichtung des Drucksensors zu ermöglichen, ist bei einer weiter bevorzugten Ausgestaltung vorgesehen, dass wenigstens zwei gegenüberliegende zweite Werkzeugangriffsflächen durchgängig ohne Vorsprung derart ausgebildet sind, dass sie an einem durch die zweiten Werkzeugflächen überdeckten Winkelbereich bezogen auf die Längsmittelachse des Drucksensors die äußerste radiale Erstreckung des Drucksensors aufweisen.

In bevorzugter Ausgestaltung ist ein einfaches Sensorelement für Motorendrucksensoren geschaffen. Das Sensorelement ist bevorzugt ein zweiteiliges Messelement. Bevorzugt besteht dieses Messelement aus einem Duomembranstößel (Stößel mit zwei Membranen) und einer Außenhülse. Der Duomembranstößel weist eine einteilige Verbindung zwischen einer Brennraum-Membran und einer Messmembran auf. Durch die Ausbildung in zwei Membranen lassen sich z.B. über die Dicke der Membranen die Steifigkeit einstellen und die Auslenkungen gering halten. Eine typische Dicke für die dünnste Stelle der als Ringmembran ausgebildeten Brennraum-Membran liegt bei etwa 0,2 mm. Eine typische Dicke der dünnsten Stelle der ebenfalls als Ringmembran ausgebildeten Messmembran liegt bei etwa 0,32 mm.

Die Ausbildung mit zwei Membranen hat den weiteren Vorteil, dass durch die beiden Membrane eine verblüffend wirksame Temperaturabschottung zum Schutz der dahinter liegenden Kraftsensorik trotz des Verzichts auf Keramiken mit den damit verbundenen Problemen von Materialverbünden erzielbar ist.

Einige Vorteile einer Konstruktion wie zuvor erwähnt sind:
- die minimale Teileanzahl;
- ein minimaler Fluchtfehler durch die einteilige Bauart, wodurch sich auch eine gute Linearität und auch eine brauchbare Hysterese-Eigenschaft ergibt;
- die einteilige Bauart ist verzugsfrei;
- es gibt insbesondere keine Wärmespannungen bei einer Stößelmontageschweißung zwischen zwei Membranen;
- durch gleiches Material für alle Teile der Druckmesszelle gibt es eine gleiche Wärmeausdehnung;
- Membranstößel, Außenhülse, Biegebalken, Sensorkörper lassen sich aus dem gleichen Material ausbilden;
- durch die Doppelmembran gibt es eine größere Sicherheit;
- das Messelement ist frei von Einbaukräften des Sensors durch die getrennte Bauweise.

Bei einer weiteren Ausgestaltung ist ein Vakuum in dem Zwischenraum der Messzelle vorgesehen, um Konvektion zu vermeiden.

Eine weitere Ausgestaltung betrifft einen Schattenspender oder eine Strahlungsbarriere in Richtung der Messmembran. Zum Beispiel könnte das Messelement eine Füllung aufweisen, z.B. Quarzsand. Dies dient der Sicherheit bei Frontmembranbruch.

Eine weitere zusätzliche Idee betrifft eine zentrale Bohrung für eine Temperaturwiderstandssonde. Eine Temperaturerhöhung (Hitzwelle) wird dadurch früher erfasst, was zur Temperaturkompensation eingesetzt werden kann.

Ein Ausführungsbeispiel der Erfindung wird nachfolgend anhand der beigefügten Zeichnung näher erläutert. Darin zeigt:
- Fig. 1: eine Seitenansicht eines Drucksensors zur Messung von Brennraumdrücken;
- Fig. 2: einen Längsschnitt durch den Drucksensor von Fig. 1;
- Fig. 3: eine Draufsicht auf ein brennraumabgewandtes Ende eines Drucksensormesselements des Drucksensors von Fig. 1;
- Fig. 4: eine Seitenansicht des Drucksensormesselements von Fig. 3;
- Fig. 5: eine Draufsicht auf ein brennraumabgewandtes Ende einer Druckmesszelle des Drucksensormesselements;
- Fig. 6: eine Schnittansicht der Druckmesszelle von Fig. 5 entlang einer Mittelebene;
- Fig. 7: eine Draufsicht auf ein brennraumabgewandtes Ende einer Druckmesseinheit des Drucksensors von Fig. 1;
- Fig. 8: eine erste Schnittansicht durch die Druckmesseinheit von Fig. 7 entlang einer ersten Mittelebene;
- Fig. 9: eine zweite Schnittansicht durch die Druckmesseinheit von Fig. 7 entlang einer zu der ersten Mittelebene senkrechten zweiten Mittelebene;

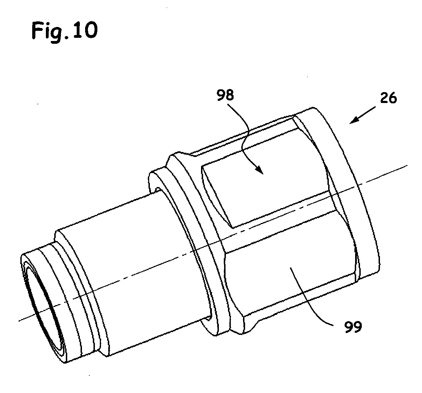

- Fig. 10: eine perspektivische Ansicht eines Einschraubbereiches des Drucksensors mit einem Werkzeugangriff;
- Fig. 11: eine Schnittansicht vergleichbar zu Fig. 6 einer weiteren Ausführungsform der Druckmesszelle mit Füllung;
- Fig. 12: eine Schnittansicht vergleichbar zu Fig. 6 noch einer weiteren Ausführungsform der Druckmesszelle mit Strahlungsbarriere; und
- Fig. 13: eine perspektivische Darstellung der in der Ausführungsform gemäß Fig. 12 verwendeten Strahlungsbarriere.

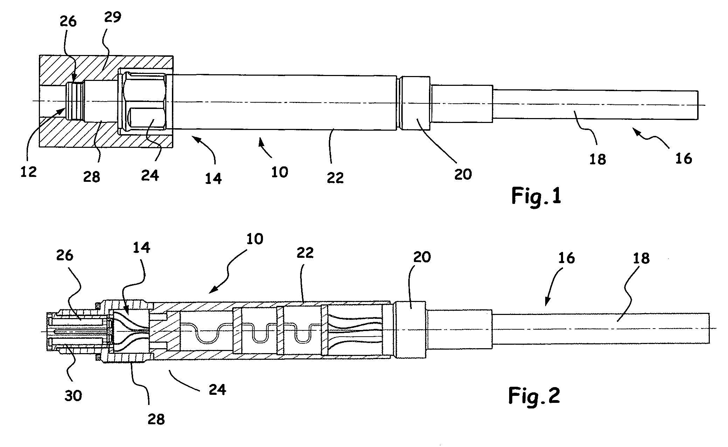

In den Fig. 1 und 2 ist eine Ausführungsform eines Drucksensors 10 zur Messung von Drücken in einem Brennraum einer Verbrennungskraftmaschine, wie beispielsweise eines Dieselmotors für Schiffe, Baumaschinen oder Kraftfahrzeuge oder eines Ottomotors für Kraftfahrzeuge oder dergleichen, dargestellt. Mit dem Drucksensor 10 kann online der Brennraumdruck während des Betriebs der Verbrennungskraftmaschine gemessen werden. Anhand des Drucksignals können Steuerung und Regelungen zum Betrieb der Verbrennungskraftmaschine durchgeführt werden, und es kann der Betrieb und die Funktion der Verbrennungskraftmaschine überwacht werden.

Der Drucksensor 10 weist an einem ersten, dem Brennraum zuzuwendenden Ende 12 eine Druckmesseinheit 14 und an dem dem Brennraum abgewandten zweiten Ende 16 ein Kabel 18 auf. Das Kabel 18 ist über eine Kabelverbindung 20 und eine Distanzhülse 22 mit der Druckmesseinheit 14 verbunden.

Die Druckmesseinheit 14 weist ein äußeres Sensorgehäuse 24 und ein Drucksensormesselement 26 auf. Das Sensorgehäuse 24 ist an seinem Außenumfang mit einem Gewinde 28 zum Einschrauben in eine Begrenzungswandung 29 des Brennraums versehen. Das Drucksensormesselement 26 ist im Inneren des Sensorgehäuses 24 aufgenommen.

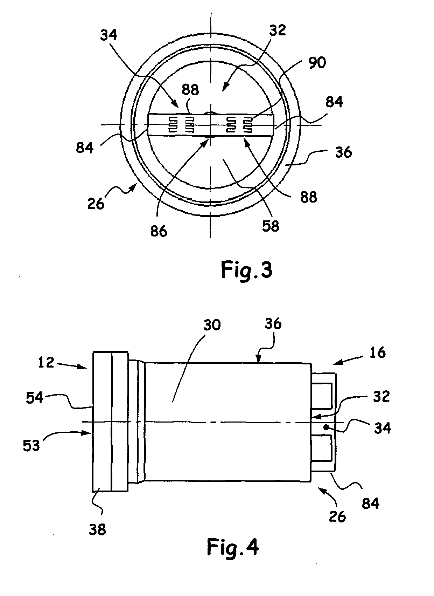

Das Drucksensormesselement 26 weist, wie aus den Fig. 3 und 4 ersichtlich, eine Druckmesszelle 30 und ein Kraftmesselement 32 in Form eines Biegebalkens 34 auf.

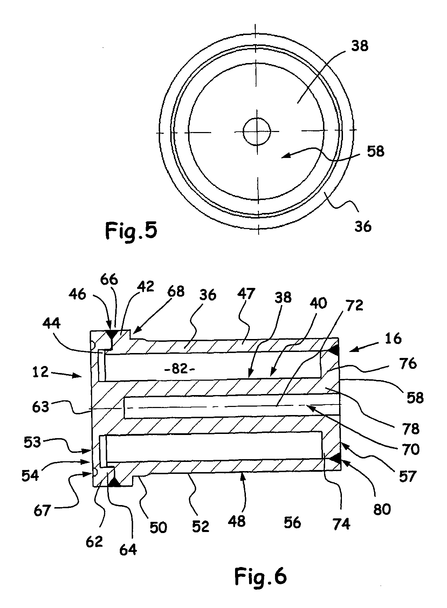

Die Druckmesszelle 30 wird im Folgenden mit Bezug auf die Fig. 5 und 6 beschrieben. Die Druckmesszelle 30 weist lediglich zwei Bauelemente oder Teile, nämlich eine Hülse 36 und eine darin aufgenommene Membran-Stößel-Einheit 38, hier in Form eines Duomembranstößels 40 auf.

Die Hülse 36 ist im Wesentlichen zylinderförmig ausgebildet. An dem ersten Ende 12 weist die Hülse 36 an ihrem Außenumfang einen sich radial nach außen erstreckenden Flansch 42 auf. Von dem Flansch 42 aus erstreckt sich ein axialer Ringvorsprung 44 weiter in axialer Richtung zur Brennraumseite hin, so dass zwischen Ringvorsprung 44 und Flansch 42 außenseitig eine Stufe 46 gebildet ist. Auf der gegenüberliegenden Seite des Flansches 42 ist eine Hülsenwandung 47 in Form eines Zylinderbereichs 48 der Hülse 36 ausgebildet, wobei sich zunächst ein dickerer Bereich 50 mit größeren Durchmesser und dann ein längerer dünnerer Bereich 52 mit geringerer Wandstärke und kleinerem Außendurchmesser anschließt. Die Hülse 36 ist einstückig ausgebildet und durch materialabtragende Formgebung aus einem größeren Metallstück ausgearbeitet.

Die Membran-Stößel-Einheit 38 ist ebenfalls einstückig ausgebildet. Auch sie ist durch materialabtragende Formgebung aus einem einzelnen Metallstück herausgearbeitet.

Die Membran-Stößel-Einheit 38 weist als einen ersten Teilbereich eine erste Membran 53 in Form einer Trennmembran 54 und als einen zweiten Teilbereich einen Stößel 56 auf. Bei der hier dargestellten Ausführungsform ist auch noch als dritter Teilbereich eine zweite Membran 57 in Form einer Messmembran 58 vorgesehen, wodurch die Membran-Stößel-Einheit 38 als Duomembranstößel 40 ausgebildet ist.

Die erste Membran 53 weist einen dickeren Randringbereich 60, einen Ringmembranbereich 62 und einen zentralen Übergangsbereich 63 auf, den sie sich mit dem Stößel 56 übergangsartig teilt. Der dickere Randringbereich 60 erstreckt sich mit einem Umfangsflansch 64 in Richtung zweites Ende 16 und sitzt auf der Stufe 46 auf, wo er mit der Hülse 36 durch eine Schweißung 66 stoffschlüssig verbunden ist. Dadurch wird das erste Ende 12 der Hülse 36 mit der Trennmembran 54 hermetisch verschlossen. Der Ringmembranbereich 62 bildet einen dünneren Biegebereich, an dem sich die Trennmembran 54 bei Druckbeaufschlagung in axialer Richtung beweglich verformen kann. Die dünnste Stelle des sich in der Dicke ändernden Ringmembranbereichs 62 ist weniger als 0,3 mm, insbesondere etwa 0,2 mm dick. Zur Unterstützung der Auslenkung kann noch eine Einkerbung 67 an der Trennmembran 54, hier im Bereich des Übergangs zwischen dem Randringbereich 60 und dem Ringmembranbereich 62 vorgesehen sein. Der Außendurchmesser der Trennmembran 54 entspricht dem Außendurchmesser des Flansches 42, so dass die Hülse 36 und die Trennmembran 54 an dem an dem ersten Ende 12 ausgebildeten Endbereich 68 bündig abschließen.

Der Stößel 56 erstreckt sich zentral innerhalb der Hülse 36 von der Trennmembran 54 ausgehend von dem ersten Ende 12 in Richtung zu dem zweiten Ende 16 hin. Er verbindet bei der dargestellten Ausführungsform die Trennmembran 54 mit der Messmembran 58, so dass sich die Messmembran 58 bei Auslenkung der Trennmembran 54 ebenfalls auslenkt. Der Stößel 56 weist eine vom zweiten Ende 16 her zugängliche Öffnung 70 in Form einer zentralen Bohrung 72 auf. Diese Bohrung 72 kann zur Aufnahme einer Temperaturmesssonde (nicht dargestellt) dienen.

Die Messmembran 58 weist ebenfalls einen dickeren Ringrandbereich 74, einen als Biegezone ausgelegten Ringmembranbereich 76 und einen zentralen Übergangsbereich 78 auf, den sie sich mit dem Stößel 56 teilt. Der Außendurchmesser des Ringrandbereichs 74 ist etwas kleiner als der über die Länge der Hülse 36 gleichbleibende Innendurchmesser der Hülse 36, so dass er im Zuge der Herstellung der Druckmesszelle 30 in die Hülse 36 eingeführt werden kann. An dem zweiten Ende 16 schließt die Messmembran 58 bündig mit der Hülse 36 ab. Der Ringrandbereich 74 ist durch eine Schweißung 80 fest mit der Hülse 36 verbunden. Der Ringmembranbereich 76 der Messmembran 58 ist dicker als der Ringmembranbereich 62 der Trennmembran 54 ausgebildet.

Ein innerhalb der Druckmesszelle 30 gebildeter Hohlraum 82 ist bei der in Fig. 6 ausgebildeten Ausführungsform der Druckmesszelle 30 evakuiert.

Wie aus den Fig. 3 und 4 ersichtlich ist, ist der Biegebalken 34 mit seinen Außenbereichen 84 an dem zweiten Ende 16 der Hülse 36 angeschweißt. Mit einem mittleren Bereich 86 ist der Biegebalken 34 mit der Außenseite des Übergangsbereichs 78 der Messmembran 58 ebenfalls durch Schweißen verbunden. Dazwischen weist der Biegebalken 34 dünnere Auslenkbereiche 88 auf, die mit Dehnmessstreifen 90 versehen sind, so dass deren Auslenkung zur Erzeugung eines elektrischen Signals verwendbar ist.

Die gesamte Druckmesszelle 30 mit den beiden Teilen des Drucksensormesselements 26 und dem Biegebalken 34 ist aus einheitlichem Material gefertigt. In dem Ausführungsbeispiel ist hierzu ein geeigneter Stahl eingesetzt.

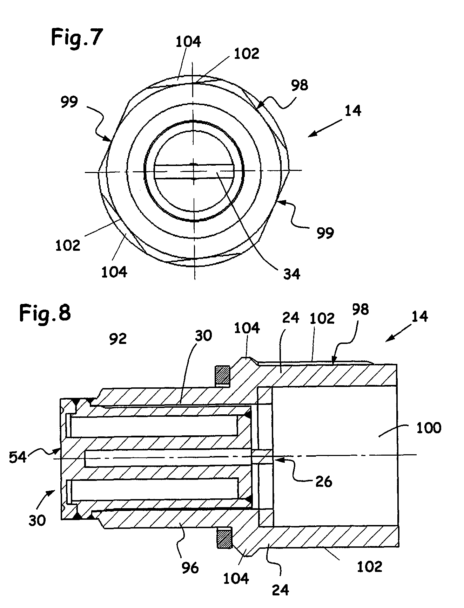

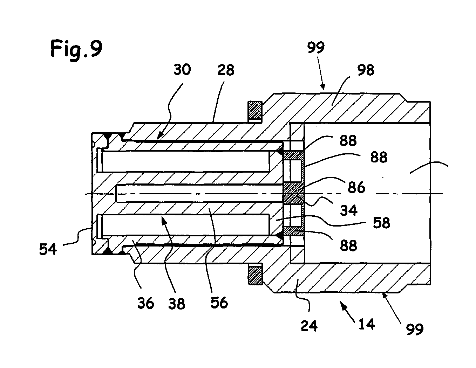

Wie aus den Fig. 7 bis 9 ersichtlich, ist die Druckmesszelle 30 in ein brennraumseitig offenes Ende des Sensorgehäuses 24 eingeführt, so dass der Flansch 42 gegen den Endrand 92 des Sensorgehäuses 24 anschlägt. Dieser Endrand 92 ist mit dem Flansch 42 und dem dickeren Bereich 50 durch eine Schweißung 94 fest verbunden.

Das Sensorgehäuse 24 weist an einem Schaftbereich 96 das Gewinde 28 auf. Daran schließt sich zum zweiten Ende 16 hin ein Werkzeugangriffsbereich in Form eines Sechskants 98 an.

Der Sechskant 98 weist vier erste Werkzeugangriffsflächen 102 auf, wobei zwischen den ersten Werkzeugangriffsflächen 102 und dem Gewinde 28 jeweils ein Vorsprung 104 zum Führen und Vermeiden eines Abrutschens eines Werkzeuges (nicht dargestellt), z.B. eines Maulschlüssels oder dergleichen vorgesehen ist. Zwei gegenüberliegende zweite Werkzeugangriffsflächen 99 sind durchgängig ohne Vorsprung derart ausgebildet, dass der Drucksensor 10 insgesamt in Längsrichtung z.B. zwischen zwei Spannbacken (nicht dargestellt) eingeführt werden kann, auch wenn die Spannbacken nur gering gelockert sind. Die zweiten Werkzeugangriffsflächen 99 sind als parallele durchgehende Schlüsselflächen ausgebildet.

Zum zweiten Ende 16 hin ist das Sensorgehäuse 24 zur Aufnahme einer Elektronik (zum Beispiel einer Chip oder ASIC, hier nicht näher dargestellt) mit einem größeren Ausnehmung 100 versehen. Die einzige mechanische feste Verbindung zwischen der Druckmesszelle 30 und dem Sensorgehäuse 24 findet sich in der Schweißung 94 an dem Endbereich 68. Axial nach innen hin können sich die Druckmesszelle 30 und das Sensorgehäuse 24 bei Temperaturänderungen unterschiedlich ausdehnen.

Wenngleich der Drucksensor 10 am Beispiel einer Verwendung für eine Online-Messung von Brennraumdrücken beschrieben ist und hierfür besonders geeignet ist, sind selbstverständlich auch weitere Verwendungsarten möglich. Der Drucksensor 10 ist zum Beispiel ebenfalls hervorragend zur Verwendung von Drücken in Hydrauliksystemen, auch bei heißen oder aggressiven Hydraulikmedien geeignet.

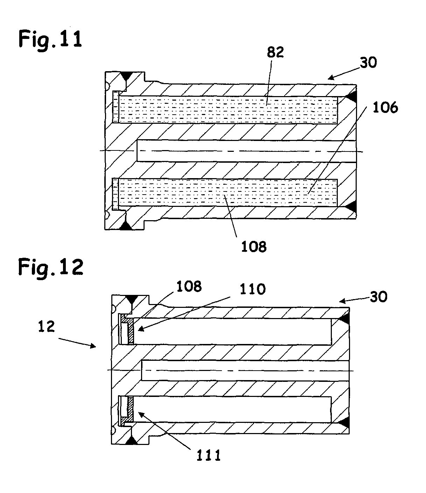

Weitere Ausführungsbeispiele der Druckmesszelle 30 zur Verwendung in dem Drucksensor 10 werden im Folgenden anhand der Darstellung der Fig. 11 bis 13 beschrieben. Dabei werden nur die Unterschiede zu der in der Fig. 5 und 6 dargestellten Ausführungsform der Druckmesszelle 30 erläutert. Alle übrigen Bestandteile und Merkmale sind gleich wie bei der oben erläuterte Ausführungsform.

Bei der Ausführungsform gemäß Fig. 6 ist der Hohlraum 82 der Druckmesszelle 30 in ihrem Innern evakuiert. Dies hat den Zweck, möglichst wenig Wärme durch den Hohlraum 82 hindurch leiten zu lassen. Dagegen ist bei der zweiten Ausführungsform der Druckmesszelle 30 gemäß Fig. 11 der Hohlraum 82 mit einer Füllung 106 aus thermisch trennendem Material befüllt. In dem dargestellten Ausführungsbeispiel ist das Material als fließfähiges gekörntes Material ausgebildet. Konkret ist in diesem Beispiel Quarzsand 108 eingesetzt.

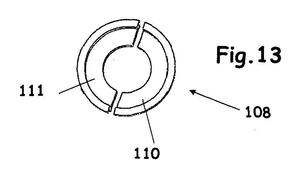

Bei der Ausführungsform gemäß Fig. 12 ist im Bereich des ersten Endes 12 im Hohlraum 82 eine Strahlungsbarriere 109 vorgesehen, die einzeln näher in Fig. 13 dargestellt ist. Die Strahlungsbarriere 109 weist zwei voneinander getrennte Einzelelemente 110 und 111 auf, die an die Form des Hohlraumes 82 angepasst sind und einzeln einfacher in den Hohlraum 82 einbringbar sind. Als Material für die Strahlungsbarriere 109 kommt jedes Material in Frage, welches Wärmestrahlung oder auch sonstige schädliche Strahlungen abschwächt.

### Bezugszeichenliste:

| | |
|---|---|
| 10 | Drucksensor |
| 12 | erstes Ende (brennraumzugewandt) |
| 14 | Druckmesseinheit |
| 16 | zweites Ende (brennraumabgewandt) |
| 18 | Kabel |
| 20 | Kabelverbindung |
| 22 | Distanzhülse |
| 24 | Sensorgehäuse |
| 26 | Drucksensormesselement |
| 28 | Gewinde |
| 29 | Begrenzungswandung |
| 30 | Druckmesszelle |
| 32 | Kraftmesselement |
| 34 | Biegebalken |
| 36 | Hülse |
| 38 | Membran-Stößel-Einheit |
| 40 | Duomembranstößel |
| 42 | Flansch |
| 44 | Ringvorsprung |
| 46 | Stufe |
| 47 | Hülsenwandung |
| 48 | Zylinderbereich |
| 50 | dickerer Bereich |
| 52 | dünnerer Bereich |
| 53 | erste Membran |
| 54 | Trennmembran |
| 56 | Stößel |
| 57 | zweite Membran |
| 58 | Messmembran |
| 60 | Randringbereich |
| 62 | Ringmembranbereich |
| 63 | Übergangsbereich |
| 64 | Umfangsflansch |
| 66 | Schweißung |
| 67 | Einkerbung |
| 68 | Endbereich |
| 70 | Öffnung |
| 72 | Bohrung |
| 74 | Ringrandbereich |
| 76 | Ringmembranbereich |
| 78 | Übergangsbereich |
| 80 | Schweißung |
| 82 | Hohlraum |
| 84 | Außenbereiche |
| 86 | mittlerer Bereich |
| 88 | Auslenkbereiche |
| 90 | Dehnmessstreifen |
| 92 | Endrand |
| 94 | Schweißung |
| 96 | Schaftbereich |
| 98 | Sechskant |
| 99 | zweite Werkzeugangriffsfläche |
| 100 | Ausnehmung |
| 102 | erste Werkzeugangriffsfläche |
| 104 | Vorsprung |
| 106 | Füllung |
| 108 | Quarzsand |
| 109 | Strahlungsbarriere |
| 110 | erstes Element |
| 111 | zweites Element |

## Patentansprüche

1. Drucksensormesselement (26) für einen Drucksensor (10) zur Druckerfassung in einem Brennraum einer im Betrieb befindlichen Verbrennungskraftmaschine, mit einer Trennmembran (54), einem Stößel (56) zum Übertragen von Auslenkungen der Trennmembran (54) auf ein Kraftmesselement (32) und einer den Stößel (56) aufnehmenden Hülse (36), die an einem dem Brennraum zuzuwendenden ersten Ende (12) durch die Trennmembran (54) verschlossen ist und an dem entgegen gesetzten zweiten Ende (16) zum Halten des Kraftmesselements (32) ausgebildet ist,
wobei der Stößel (56) einstückig mit der Trennmembran (54) als Membran-Stößel-Einheit (38) ausgebildet ist, wobei die Hülse (36) und die Membran-Stößel-Einheit (38) aus dem gleichen Metall-Material gebildet sind,
**dadurch gekennzeichnet,**
**dass** die Membran-Stößel-Einheit (38) an dem der Trennmembran (54) entgegen gesetzten Ende des Stößels (56) ebenfalls einstückig eine zweite Membran (57) aufweist, die mit dem zweiten Ende der Hülse (36) abschließt.

2. Drucksensormesselement nach einem der voranstehenden Ansprüche,
**dadurch gekennzeichnet,**
**dass** es (26) insgesamt aus einem einheitlich gleichen Material gefertigt ist.

3. Drucksensormesselement nach einem der voranstehenden Ansprüche,
**dadurch gekennzeichnet,**
**dass** ein Kraftmesselement (32) einerseits an dem zweiten Ende der Hülse (36) und andererseits an dem der Trennmembran abgewandten Ende des Stößels (56) befestigt ist und vorzugsweise aus dem gleichen Material wie die Hülse (36) und die Membran-Stößel-Einheit (38) gefertigt ist.

4. Drucksensormesselement nach Anspruch 3,
**dadurch gekennzeichnet,**
**dass** das Kraftmesselement (32) als Biegebalken (34) mit Dehnmessstreifen (90) ausgeführt ist.

5. Drucksensormesselement nach einem der voranstehenden Ansprüche,
**dadurch gekennzeichnet,**
**dass** die Hülse (36) an ihrem ersten Ende (12) einen sich radial nach außen erstreckenden Flansch (42) und einen sich von dem Flansch (42) mit geringerem Außendurchmesser axial in Richtung Trennmembran (54) vorstehenden Ringvorsprung (44) aufweist und dass die Trennmembran (54) einen äußeren verdickten Randringbereich (60) aufweist, der außenseitig bündig mit dem Flansch (42) abschließt und innen den Ringvorsprung (44) übergreift.

6. Drucksensormesselement nach einem der voranstehenden Ansprüche,
**dadurch gekennzeichnet,**
**dass** die Hülse (36) und die Trennmembran (54) stoffschlüssig, insbesondere durch eine Schweißung (66), aneinander befestigt sind.

7. Drucksensormesselement nach einem der voranstehenden Ansprüche,
**dadurch gekennzeichnet,**
**dass** ein in der Hülse (36) zwischen einer Hülsenwandung (47) und der Membran-Stößel-Einheit (38) gebildeter Hohlraum (82) evakuiert ist oder eine Füllung (106) mit Feststoffpartikeln aus einem Material mit gegenüber Brennraumtemperaturen höherem Schmelzpunkt und/oder eine Strahlungsbarriere (109) aufweist.

8. Drucksensormesselement nach einem der voranstehenden Ansprüche,
**dadurch gekennzeichnet,**
**dass** der Stößel (56) eine von dem zweiten Ende (16) aus zugängliche, sich in Längsrichtung ersteckende Öffnung (70) aufweist.

9. Drucksensor (10) zur Druckerfassung in einem Brennraum einer im Betrieb befindlichen Verbrennungskraftmaschine, mit einem Drucksensormesselement (26) nach einem der voranstehenden Ansprüche.

10. Drucksensor (10) nach Anspruch 9,
**dadurch gekennzeichnet,**
**dass** ein äußeres Sensorgehäuse (24) zur Befestigung an einem den Brennraum begrenzenden Bauteil vorgesehen ist, wobei die Hülse (36) in dem Sensorgehäuse (24) aufgenommen ist und ausschließlich mit einem an ihrem ersten Ende (12) ausgebildeten Endbereich (68) an dem Sensorgehäuse (24) befestigt ist.

11. Drucksensor (10) nach Anspruch 10,
**dadurch gekennzeichnet,**
**dass** das äußere Sensorgehäuse (24) einen Werkzeugangriffsbereich mit Werkzeugangriffsflächen (102, 99) für ein Werkzeug, insbesondere einen Schraubenschlüssel, mehr insbesondere einen Maulschlüssel, aufweist.

12. Drucksensor (10) nach Anspruch 11,
**dadurch gekennzeichnet,**
**dass** der Werkzeugangriffsbereich zwischen einem Gewinde (28) zum Einschrauben des Drucksensors (10) und wenigstens einer ersten Werkzeugangriffsfläche (102) einen Vorsprung (104) zum Führen des Werkzeuges, vorzugsweise zum Vermeiden eines Abrutschens zu dem Gewinde (28) hin, aufweist, wobei wenigstens zwei gegenüberliegende, vorzugsweise parallele, zweite Werkzeugangriffsflächen (99) durchgängig ohne Vorsprung derart ausgebildet sind, dass sie an einem durch die zweiten Werkzeugflächen überdeckten Winkelbereich bezogen auf die Längsmittelachse des Drucksensors die äußerste radiale Erstreckung des Drucksensors aufweisen.

13. Verfahren zur Messung von Drücken in Brennräumen einer Verbrennungskraftmaschine oder in Hydrauliksystemen während des Betriebs der Verbrennungskraftmaschine bzw. des Hydrauliksystems,
**gekennzeichnet durch** Einsatz eines Drucksensormesselements (26) nach einem der Ansprüche 1 bis 8 und/oder eines Drucksensors (10) nach einem der Ansprüche 9 bis 12.

## Claims

1. Pressure sensor measuring element (26) for a pressure sensor (10) intended to detect the pressure in a combustion chamber of an internal combustion engine during its operation, comprising a separating membrane (54), a push rod (56) for transmitting deflections of said membrane (54) to a force measuring element (32), and a sleeve (36) receiving said push rod (56), said sleeve being closed by said separating membrane (54) on a first end (12) to be turned toward the combustion chamber and being constructed for holding the force measuring element (32) on the opposite second end (16),
wherein the push rod (56) is integrally formed with said separating membrane (54) as a membrane-push rod unit (38), wherein the sleeve (36) and the membrane-push rod unit (38) are made from the same metal material,
**characterized in that** the membrane-push rod unit (38) includes on the end of the push rod (56) opposite to said separating membrane (54) a second membrane (57) that is also integrally formed and that terminates with the second end of the sleeve (36).

2. Pressure sensor measuring element according to one of the preceding claims, **characterized in that** the same (26) is entirely fabricated from the same uniform material.

3. Pressure sensor measuring element according to one of the preceding claims,
**characterized in that**
a force measuring element (32) is fixed on the one hand to the second end of the sleeve (36) and on the other hand to the end of the push rod (56) turned away from the separating membrane and is preferably fabricated from the same material as the sleeve (36) and the membrane-push rod unit (38).

4. Pressure sensor measuring element according to claim 3,
**characterized in that**
the force measuring element (32) is constructed as a beam in bending (34) including strain gauges (90).

5. Pressure sensor measuring element according to one of the preceding claims,
**characterized in that**
the sleeve (36) on the first end thereof comprises a radially outwardly extending flange (42) and an annular protrusion (44) protruding from the flange (42) with a smaller outer diameter axially toward the separating membrane (54), and that the separating membrane (54) includes an outer thickened rim ring portion (60) that terminates flush with the flange (42) on the outside and which overlaps the annular protrusion (44) inside.

6. Pressure sensor measuring element according to one of the preceding claims,
**characterized in that**
the sleeve (36) and the separating membrane (54) are connected to each other by material engagement, particularly by welding (66).

7. Pressure sensor measuring element according to one of the preceding claims,
**characterized in that**
a hollow space (82) formed in the sleeve (36) between a sleeve wall (47) and the membrane-push rod unit (38) is evacuated or includes a filling (106) with solid material particles from a material having an elevated melting point compared to combustion chamber temperatures, and/or a radiation barrier (109).

8. Pressure sensor measuring element according to one of the preceding claims,
**characterized in that**
the push rod (56) includes an opening (70) extending in the longitudinal direction and being accessible from the second end (16).

9. Pressure sensor (10) for detecting the pressure in a combustion chamber of an internal combustion engine during its operation, said pressure sensor comprising a pressure sensor measuring element (26) according to one of the preceding claims.

10. Pressure sensor (10) according to claim 9,
**characterized in that**
an outer sensor housing (24) for fixing to a component delimiting the combustion chamber is provided, wherein the sleeve (36) is received in the sensor housing (24) and is fixed to the sensor housing (24) exclusively by an end part (68) thereof formed on its first end (12).

11. Pressure sensor (10) according to claim 10,
**characterized in that**
the outer sensor housing (24) has a tool engagement area with tool engagement surfaces (102, 99) for a tool, particularly a screw wrench and more particularly a combination wrench.

12. Pressure sensor (10) according to claim 11,
**characterized in that**
the tool engagement area includes a protrusion (104) between a thread (28) for screwing-in said pressure sensor (10) and at least one first tool engagement surface (102) for guiding the tool, preferably for avoiding it to slide down toward the thread (28), wherein at least two mutually opposite and preferably parallel second tool engagement surfaces (99) are constructed continuously and without protrusion in such a manner that they exhibit the outermost radial extension of the pressure sensor in an angle area that is covered by the second tool engagement surfaces, referred to the longitudinal center line of the pressure sensor.

13. Method for measuring pressures in combustion chambers of an internal combustion engine or in hydraulic systems during the operation of the internal combustion engine or the hydraulic system,
**characterized by**
the use of a pressure sensor measuring element (26) according to one of the claims 1 to 8 and/or a pressure sensor (10) according to one of the claims 9 to 12.

## Revendications

1. Elément de mesure de capteur de pression (26) pour un capteur de pression (10) pour détecter la pression dans une chambre de combustion d'un moteur à combustion interne en marche, comprenant une membrane de séparation (54), un poussoir (56) pour transmettre des flèches de la membrane de séparation (54) à un élément de mesure de force (32), et un manche (36) recevant le poussoir (56), manche qui est fermé, par ladite membrane de séparation (54), à une première extrémité (12) destinée à être tournée vers la chambre de combustion et qui est agencée pour tenir ledit élément de mesure de force (32) à la deuxième extrémité (16) opposée,
ledit poussoir (56) étant formé en une pièce avec la membrane de séparation (54) et comme une unité membrane-poussoir (38) et le manche (36) et l'unité membrane-poussoir (38) étant fabriqués en un même matériel métallique,
**caractérisé en ce que**
l'unité membrane-poussoir (38) comporte, à l'extrémité du poussoir (56) opposée à la membrane de séparation (54), une deuxième membrane (57) aussi en une pièce et finissant avec la deuxième extrémité du manche (36).

2. Elément de mesure de capteur de pression selon l'une des revendications précédentes,
**caractérisé en ce que**
ledit élément (26) en tout est fabriqué en un même matériel unique.

3. Elément de mesure de capteur de pression selon l'une des revendications précédentes,
**caractérisé en ce qu'**un
élément de mesure de force (32) est fixé d'une part à la deuxième extrémité du manche (36) et d'autre part à l'extrémité du poussoir (56) détournée de la membrane de séparation et est fabriqué de préférence en le même matériel comme le manche (36) et l'unité membrane-poussoir (38).

4. Elément de mesure de capteur de pression selon la revendication 3,
**caractérisé en ce que**
l'élément de mesure de force (32) est configuré comme une poutre de courbement (34) avec jauge de contrainte (90).

5. Elément de mesure de capteur de pression selon l'une des revendications précédentes,
**caractérisé en ce que**
le manche (36) comporte sur sa première extrémité (12) une bride (42) s'étendant radialement vers l'extérieur et un épaulement annulaire (44) axialement saillant de la bride (42) à petit diamètre extérieur vers la membrane de séparation (54) et **en ce que** la membrane de séparation (54) comporte une partie annulaire de bord extérieure bulbeuse (60) formant une surface plane avec la bride (42) à l'extérieur et chevauchant l'épaulement annulaire (44) à l'intérieur.

6. Elément de mesure de capteur de pression selon l'une des revendications précédentes,
**caractérisé en ce que**
le manche (36) et la membrane de séparation (54) sont fixés l'un à l'autre par liaison de matière, notamment par soudure (66).

7. Elément de mesure de capteur de pression selon l'une des revendications précédentes,
**caractérisé en ce qu'**un
creux (82) formé dans le manche (36) entre une paroi (47) du manche et l'unité membrane-poussoir (38) est évacué de l'air ou comporte une charge (106) de particules de matière solide en un matériel à point de fusion plus élevé par rapport aux températures de la chambre de combustion et/ou une barrière de rayonnement (109).

8. Elément de mesure de capteur de pression selon l'une des revendications précédentes,
**caractérisé en ce que**
le poussoir (56) comporte une aperture (70) s'étendant en la direction longitudinale et étant accessible de la deuxième extrémité (16).

9. Capteur de pression (10) pour détecter la pression dans une chambre de combustion d'un moteur à combustion interne en marche, comprenant un élément de mesure de capteur de pression (26) selon l'une des revendications précédentes.

10. Capteur de pression (10) selon la revendication 9,
**caractérisé en ce qu'**une
boîte de capteur externe (24) est agencée pour sa fixation à un élément de construction délimitant la chambre de combustion, le manche (36) étant reçu dans la boîte de capteur (24) et fixé à la boîte (24) du capteur exclusivement par une partie extrême (68) formée sur sa première extrémité (12).

11. Capteur de pression (10) selon la revendication 10, **caractérisé en ce que**
la boîte de capteur externe (24) comporte une partie d'entrainement d'outil avec des surfaces d'entrainement d'outil (102, 99) pour un outil, notamment une clé et en particulier une clé mixte.

12. Capteur de pression (10) selon la revendication 11,
**caractérisé en ce que**
la partie d'entrainement d'outil comporte, entre un filet (28) pour visser le capteur de pression (10) et au moins une première surface d'entrainement d'outil (102), un épaulement (104) pour guider ledit outil et, de préférence, pour éviter son glissement vers le filet (28), au moins deux deuxièmes surfaces d'entrainement d'outil opposées et, de préférence, parallèles (99) étant formées de manière continue et sans épaulement de sorte qu'elles présentent l'étendue radiale le plus extrême du capteur de pression sur une partie angulaire recouverte des deuxièmes surfaces de l'outil, relatif de l'axe moyen longitudinal du capteur de pression.

13. Procédé pour mesurer les pressions dans les chambres de combustion d'un moteur à combustion interne ou dans les systèmes hydrauliques pendant la marche du moteur à combustion interne ou du système hydraulique,
**caractérisé par**
l'usage d'un élément de mesure de capteur de pression (26) selon l'une des revendications 1 à 8 et/ou d'un capteur de pression (10) selon l'une des revendications 9 à 12.
